# EUROPÄISCHE PATENTANMELDUNG

(11) **EP 4 815 375 A1**
(43) Veröffentlichungstag der Anmeldung: **30.09.2026**
(21) Anmeldenummer: 26166770.3
(22) Anmeldetag: 23.03.2026
(51) Int. Cl.: H04L 12/28, H04L 41/084, H04L 41/08, H04M 11/02

(54) **VERFAHREN UND VORRICHTUNG ZUR INSTALLATION EINER HAUSKOMMUNIKATIONSANLAGE**

(30) Priorität: 24.03.2025 DE 102025111289
(71) Anmelder: Horst Siedle GmbH & Co. KG., 78120 Furtwangen (DE)
(72) Erfinder: JOOS, Andreas, 78112 St. Georgen (DE)
(74) Vertreter: Isarpatent

(57) **Zusammenfassung**

Die vorliegende Erfindung betrifft ein Verfahren zur Installation einer Hauskommunikationsanlage, bei dem eine Mehrzahl von physischen Hauskommunikationsendgeräte bereitgestellt, identifiziert und einem digitalen Abbild der Hauskommunikationsanlage in einer zentralen Datenverarbeitungseinheit zugeordnet werden. Nach der physischen Installation der Hauskommunikationsendgeräte werden Betriebs- und Konfigurationsdaten basierend auf dem digitalen Abbild generiert, bereitgestellt und auf die installierten Hauskommunikationsendgeräte übertragen, sodass die Hauskommunikationsanlage gemäß den Konfigurationsdaten aktiviert wird. Die Übertragung der Konfigurationsdaten kann direkt über eine Netzwerkverbindung zwischen der Hauskommunikationsanlage und der zentralen Datenverarbeitungseinheit oder alternativ über ein mobiles Gerät erfolgen. Die vorliegende Erfindung betrifft ferner eine Hauskommunikationsanlage.

## Beschreibung

### GEBIET DER ERFINDUNG

Die vorliegende Erfindung betrifft die Installation und Konfiguration einer Hauskommunikationsanlage mit einer Mehrzahl von physischen Hauskommunikationsendgeräten. Insbesondere betrifft die Erfindung ein Verfahren und eine Vorrichtung zur vereinfachten Installation, Identifikation und Konfiguration der Hauskommunikationsendgeräten einer Hauskommunikationsanlage unter Verwendung einer zentralen Datenverarbeitungseinheit.

### TECHNISCHER HINTERGRUND

Die vorliegende Erfindung bezieht sich auf das Gebiet der Hauskommunikation als Teil der Hausautomatisierung. Die Hausautomatisierung befindet sich im Umfeld des intelligenten Wohnens, welches Lösungen im privaten oder geschäftlichen Wohn- und Arbeitsbereich bezeichnet, die auf die speziellen Bedürfnisse der Bewohner von privaten Wohnhäusern, Wohnblocks oder Geschäftshäuser ausgerichtet sind, bei denen Geräte, Systeme und Technologien eingesetzt werden, die mehr Effizienz, Komfort, Wirtschaftlichkeit, Flexibilität und Sicherheit schaffen.

Ein Aspekt der Hausautomatisierung bezieht sich auf die Hauskommunikation mittels entsprechender Hauskommunikationsendgeräte oder (Gegen-)Sprechanlagen. Moderne Hauskommunikationsanlagen umfassen typischerweise eine Vielzahl von verschiedenen Hauskommunikationsendgeräten, die miteinander über ein Verbindungsnetzwerk, wie z.B. Ethernet oder KNX-Bussystem, gekoppelt sind. Man unterscheidet dabei zwischen so genannten Innenstationen, die in einem geschützten Bereich innerhalb des Hauses oder einer entsprechenden Wohnungseinheit angeordnet sind, und so genannte Türstationen oder Außenstationen, die im öffentlichen Bereich vor oder unmittelbar an der Haus- oder Gebäudetür, Tiefgarageneinfahrten, Zugängen zu Grundstücken, oder ähnlichem angebracht sind und über welche Besucher mit Hausbewohnern in kommunikative Verbindung treten können. Diese Hauskommunikationsendgeräte weisen meist eine Klingel oder ein Klingeltastenfeld, einen Türöffner, eine Gegensprechanlage, eine Kamera und ein Display auf, über welche eine bidirektionale Kommunikation zwischen Besucher und Haus- oder Wohnungsbesitzer ermöglicht wird. Derartige Hauskommunikationsanlagen sind allgemein bekannt, so dass darauf nicht näher eingegangen werden muss.

In herkömmlichen Systemen erfordert die Installation einer solchen Anlage umfangreiche manuelle Konfigurationsschritte vor Ort, um die einzelnen Hauskommunikationsendgeräte miteinander zu verbinden und zu synchronisieren. Dabei müssen Installateure oft komplexe Einstellungen direkt an den physischen Geräten vornehmen, was mit erheblichem Zeitaufwand verbunden ist und technisches Fachwissen erfordert.

Ein häufiges Problem bei herkömmlichen Hauskommunikationsanlagen ist die unübersichtliche und fehleranfällige Zuordnung der physischen Hauskommunikationsendgeräte zu ihrer jeweiligen Funktion in der Anlage. Die Identifikation der einzelnen Hauskommunikationsendgeräte erfolgt oft manuell oder über unzuverlässige Methoden, sodass Verwechslungen oder Fehlkonfigurationen auftreten können. Dies erschwert insbesondere den Austausch oder die Erweiterung der Anlage, da neue Hauskommunikationsendgeräten mühsam in das bestehende System integriert werden müssen. Zudem fehlen oft zentrale Mechanismen zur Validierung der Konfiguration oder zur automatischen Erkennung fehlerhafter oder unvollständiger Einstellungen.

Insbesondere bei größeren oder komplexeren Installationen kann es daher zu Verzögerungen bei der Inbetriebnahme und zu Fehlfunktionen aufgrund inkonsistenter Konfigurationen kommen. Eine effiziente und strukturierte Vorgehensweise zur Installation und Konfiguration von Hauskommunikationsanlagen ist daher wünschenswert.

### ZUSAMMENFASSUNG DER ERFINDUNG

Die vorliegende Erfindung schafft ein Verfahren zur Installation einer Hauskommunikationsanlage sowie eine Hauskommunikationsanlage mit den Merkmalen der unabhängigen Patentansprüche. Weitere vorteilhafte Ausführungsformen sind Gegenstand der abhängigen Ansprüche.

Demgemäß ist vorgesehen:
- Ein Verfahren zur Installation einer Hauskommunikationsanlage. Das Verfahren umfasst die Bereitstellung einer Mehrzahl von physischen Hauskommunikationsendgeräten der Hauskommunikationsanlage und die Erfassung einer eindeutigen Identifikation jedes Hauskommunikationsendgeräts durch eine Identifikationseinheit. Anschließend werden die erfassten Hauskommunikationsendgeräte einem digitalen Abbild der Hauskommunikationsanlage in einer zentralen Datenverarbeitungseinheit zugeordnet. Die physischen Hauskommunikationsendgeräte werden gemäß diesem digitalen Abbild installiert, bevor Betriebs- und Konfigurationsdaten bereitgestellt und an die Hauskommunikationsendgeräte übertragen werden, um die Hauskommunikationsanlage zu aktivieren.
- Eine Hauskommunikationsanlage, die aus einer Mehrzahl von physischen Hauskommunikationsendgeräten besteht, welche über eine Netzwerkverbindung miteinander gekoppelt sind. Die Hauskommunikationsanlage umfasst eine Kommunikationsschnittstelle zur Verbindung mit einer zentralen Datenverarbeitungseinheit sowie eine Steuereinheit, die dazu ausgebildet ist, eine zuvor erstellte Konfiguration aus einem digitalen Abbild der Hauskommunikationsanlage zu empfangen und die physischen Hauskommunikationsendgeräte entsprechend dieser Konfiguration zu konfigurieren.

Die Installation einer Hauskommunikationsanlage stellt traditionell einen komplexen und fehleranfälligen Prozess dar. Dieser erfordert nicht nur eine sorgfältige physische Montage der Hauskommunikationsendgeräte, sondern auch eine individuelle Konfiguration, die häufig manuell vor Ort durchgeführt werden muss. Insbesondere in größeren Installationen mit mehreren Türstationen, Innenstationen und Zutrittskontrollsystemen kann dies zeitaufwendig und fehleranfällig sein.

Ein zentraler Punkt ist dabei die Identifikation der einzelnen physischen Hauskommunikationsendgeräte und deren Zuordnung innerhalb des Systems. In vielen konventionellen Lösungen ist es erforderlich, dass ein Techniker jedes Hauskommunikationsendgerät manuell adressiert oder einrichtet, bevor dieses in das Gesamtsystem integriert wird. Zudem sind oft nachträgliche Anpassungen notwendig, falls während der Installation Unstimmigkeiten auftreten.

Ein weiteres Problem besteht darin, dass viele traditionelle Installationsprozesse keine Möglichkeit bieten, eine Konfiguration vorab vollständig zu erstellen und zu prüfen. Stattdessen erfolgt die Konfiguration oft erst nach der physischen Installation direkt an der Anlage, was zusätzliche Zeit für die Einrichtung erfordert und in der Praxis zu Verzögerungen führen kann.

Ferner gibt es keine standardisierte Möglichkeit, die Hauskommunikationsanlage nach einer physikalischen Veränderung - beispielsweise durch den Austausch eines defekten Hauskommunikationsendgeräts- automatisch zu aktualisieren, sodass eine manuelle Neukonfiguration erforderlich wird.

Die Erfindung adressiert diese Herausforderungen, indem sie ein Verfahren bereitstellt, das eine strukturierte und optimierte Installation von Hauskommunikationsanlagen ermöglicht.

Hierzu wird zunächst eine digitale Abbildung der Hauskommunikationsanlage in einer zentralen Datenverarbeitungseinheit erstellt. Die einzelnen physischen Hauskommunikationsendgeräte werden dann mittels einer eindeutigen Identifikation erfasst und dem digitalen Abbild zugeordnet. Dies ermöglicht eine vorab definierte und geprüfte Konfiguration, die ohne zusätzliche manuelle Schritte nach der physischen Installation auf die Hauskommunikationsendgeräte übertragen werden kann.

Durch die zentrale Datenverarbeitungseinheit kann der gesamte Installationsprozess digital begleitet und gesteuert werden. Dadurch kann bereits vor der physischen Montage geprüft werden, ob alle Hauskommunikationsendgeräte vollständig erfasst und korrekt konfiguriert sind. Zudem können Plausibilitätsprüfungen durchgeführt werden, um technische Fehler oder Konflikte frühzeitig zu erkennen.

Ein weiterer Vorteil der Erfindung liegt in der Möglichkeit, dass die physische Installation nach der Konfigurationsphase durch weniger geschultes Personal durchgeführt werden kann, da keine individuelle Adressierung oder manuelle Einrichtung erforderlich ist.

Eine Hauskommunikationsanlage im Sinne der vorliegenden Erfindung umfasst eine Mehrzahl von physischen Hauskommunikationsendgeräten, die über eine Netzwerkverbindung miteinander gekoppelt sind. Physische Hauskommunikationsendgeräte können insbesondere Türstationen zur Installation an einer Zugangsstelle, Innenstationen zur Kommunikation innerhalb eines Gebäudes, Türöffner zur Steuerung von Türen oder anderen Zugängen sowie Steuer- und Bedieneinheiten umfassen. Zusätzlich können weitere physische Hauskommunikationsendgeräte vorgesehen sein, etwa zusätzliche Schaltaktoren oder Sensoren zur Steuerung und Überwachung von Funktionen der Hauskommunikationsanlage. Die Hauskommunikationsanlage ist typischerweise über eine Kommunikationsverbindung mit einer zentralen Datenverarbeitungseinheit gekoppelt, die die Konfiguration und Verwaltung der einzelnen Hauskommunikationsendgeräte ermöglicht.

Die zentrale Datenverarbeitungseinheit dient der Verwaltung der Hauskommunikationsanlage und insbesondere der Erstellung, Speicherung und Aktualisierung eines digitalen Abbilds der Hauskommunikationsanlage. Das digitale Abbild ist eine softwareseitige Repräsentation der physischen Hauskommunikationsanlage, die alle identifizierten physischen Hauskommunikationsendgeräte und ihre zugehörigen Betriebs- und Konfigurationsdaten umfasst. Auf Grundlage dieses digitalen Abbilds kann die Hauskommunikationsanlage bereits vor der eigentlichen Installation konfiguriert werden, sodass die physische Installation und Inbetriebnahme mit minimalem Aufwand erfolgen kann.

Eine zentrale Datenverarbeitungseinheit kann als Cloud-Dienst oder als entfernter Server realisiert sein, sodass der Zugriff von verschiedenen Endgeräten und Benutzern ortsunabhängig erfolgen kann. Alternativ kann sie auch als lokales Rechenzentrum eines Anbieters oder Betreibers betrieben werden, wodurch eine höhere Kontrolle über die gespeicherten Daten möglich ist. Die zentrale Datenverarbeitungseinheit kann über eine Netzwerkverbindung, beispielsweise eine Internetverbindung, mit der Hauskommunikationsanlage gekoppelt werden, um Konfigurationsdaten bereitzustellen und bei Änderungen der Installation das digitale Abbild entsprechend zu aktualisieren.

Gemäß einer Ausführungsform erfolgt die Übertragung der Betriebs- und Konfigurationsdaten auf die installierten Hauskommunikationsendgeräte der Hauskommunikationsanlage über eine lokale Netzwerkverbindung, die entweder kabelgebunden oder drahtlos realisiert sein kann.

Eine kabelgebundene Verbindung über Ethernet bietet in der Regel eine höhere Stabilität und Datensicherheit und eignet sich insbesondere für Neubauten oder Installationen, bei denen eine entsprechende Infrastruktur bereits vorhanden oder leicht nachrüstbar ist. Alternativ kann eine drahtlose Verbindung per WLAN verwendet werden, was sich insbesondere in Bestandsgebäuden anbietet, in denen keine Netzwerkverkabelung vorhanden ist oder eine nachträgliche Installation nur mit großem Aufwand möglich wäre.

Die physikalischen Hauskommunikationsendgeräte können entweder über einen externen Router oder Switch miteinander verbunden sein oder ein zentrales Hauskommunikationsendgerät der Hauskommunikationsanlage kann als WLAN-Access-Point fungieren, um eine direkte Kommunikation zwischen den Hauskommunikationsendgeräten zu ermöglichen. Falls eine Internetverbindung besteht, kann darüber eine Synchronisation mit der zentralen Datenverarbeitungseinheit erfolgen, während die Hauskommunikationsanlage bei Bedarf auch autonom innerhalb des lokalen Netzwerks betrieben werden kann.

Gemäß einer weiteren Ausführungsform umfasst das Verfahren eine Identifikationseinheit, die dazu ausgebildet ist, die eindeutige Identifikation eines physikalischen Hauskommunikationsendgeräts der Hauskommunikationsanlage zu erfassen. Die Identifikationseinheit kann beispielsweise in einem mobilen Endgerät integriert sein, als eigenständiges Lesegerät betrieben werden oder an einen stationären Computer angeschlossen sein. Sie ermöglicht die zuverlässige Erfassung der eindeutigen Identifikationsmerkmale, wodurch eine präzise Zuordnung der physischen Hauskommunikationsendgeräte zum digitalen Abbild der Hauskommunikationsanlage in der zentralen Datenverarbeitungseinheit gewährleistet wird.

Die Identifikation erfolgt vorzugsweise vor der Installation der Hauskommunikationsendgeräte, sodass bereits bei der Planung und Konfiguration der Hauskommunikationsanlage sichergestellt werden kann, dass jedes physikalische Hauskommunikationsendgerät an seinem vorgesehenen Einbauort installiert wird. Dadurch wird nicht nur eine fehlerfreie Installation unterstützt, sondern auch der spätere Wartungsprozess erleichtert, da die Konfigurationsdaten eindeutig einem identifizierten Hauskommunikationsendgerät zugeordnet sind.

Gemäß einer weiteren Ausführungsform kann die Identifikationseinheit das Identifikationsmerkmal eines physikalischen Hauskommunikationsendgeräts der Hauskommunikationsanlage auf unterschiedliche Weise erfassen.

Optische Identifikation: Das physikalische Hauskommunikationsendgerät kann mit einem Barcode oder QR-Code versehen sein, der durch eine Kamera oder einen Scanner erfasst wird. Die erfassten Daten können entweder lokal auf dem Gerät verarbeitet oder an die zentrale Datenverarbeitungseinheit zur weiteren Verarbeitung übertragen werden.

Elektronische Identifikation: Alternativ kann die Identifikationseinheit das Identifikationsmerkmal elektronisch auslesen, beispielsweise durch RFID- oder NFC-Technologie. Hierbei wird ein entsprechendes Lesegerät verwendet, um die gespeicherten Informationen kontaktlos zu erfassen und der zentralen Datenverarbeitungseinheit zu übermitteln.

Manuelle Identifikation: Falls eine automatisierte Erfassung nicht möglich oder nicht gewünscht ist, kann die Identifikationseinheit eine manuelle Eingabe eines Identifikationsschlüssels, insbesondere einer Seriennummer, ermöglichen. Dies kann beispielsweise über eine Eingabemaske auf einem Benutzerterminal erfolgen.

Durch diese verschiedenen Methoden wird eine flexible und zuverlässige Identifikation physischer Hauskommunikationsendgeräte gewährleistet, unabhängig von ihrer Bauform oder der jeweiligen Umgebung, in der sie installiert werden.

Gemäß einer weiteren Ausführungsform erfolgt die Übertragung der Betriebs- und Konfigurationsdaten entweder über eine Netzwerkverbindung zwischen der Hauskommunikationsanlage und der zentralen Datenverarbeitungseinheit oder durch eine temporäre Verbindung mit einem mobilen Gerät.

In einer bevorzugten Ausführungsform werden die Konfigurationsdaten direkt über eine bestehende Netzwerkverbindung an die physischen Hauskommunikationsendgeräte der Hauskommunikationsanlage übermittelt. Sobald die physikalischen Hauskommunikationsendgeräte installiert sind und mit dem Netzwerk verbunden wurden, können sie die für sie bestimmten Betriebs- und Konfigurationsdaten empfangen.

Alternativ können die Betriebs- und Konfigurationsdaten über ein mobiles Gerät an die Hauskommunikationsanlage übertragen werden. Dazu werden die Daten zunächst in der zentralen Datenverarbeitungseinheit bereitgestellt und anschließend über eine temporäre Verbindung auf die installierten Hauskommunikationsendgeräte übertragen.

Die nachfolgenden Ausführungsformen erläutern diese beiden Varianten im Detail.

Gemäß einer weiteren Ausführungsform werden die Betriebs- und Konfigurationsdaten direkt von der zentralen Datenverarbeitungseinheit über eine bestehende Netzwerkverbindung an die physikalischen Hauskommunikationsendgeräte der Hauskommunikationsanlage übertragen. Die Hauskommunikationsanlage kann über eine kabelgebundene oder drahtlose Netzwerkverbindung mit dem Internet verbunden sein. Nach der Installation der physikalischen Hauskommunikationsendgeräte und ihrer Identifikation im digitalen Abbild empfängt jedes Hauskommunikationsendgerät seine spezifischen Konfigurationsdaten und wendet diese automatisch an.

In einer bevorzugten Ausführungsform erfolgt die Datenübertragung verschlüsselt, um die Sicherheit der Konfigurationsdaten zu gewährleisten. Falls während des Übertragungsprozesses eine Netzwerkunterbrechung auftritt, können die Daten automatisch erneut angefordert werden.

Da die zentrale Datenverarbeitungseinheit entfernt betrieben wird, erfordert diese Variante eine Internetverbindung der Hauskommunikationsanlage, entweder über eine direkte Netzwerkanbindung oder über ein lokales Gateway, das die Kommunikation mit der entfernten Datenverarbeitungseinheit ermöglicht.

Gemäß einer weiteren Ausführungsform erfolgt die Übertragung der Betriebs- und Konfigurationsdaten über ein mobiles Gerät, das als Vermittlungsstation zwischen der zentralen Datenverarbeitungseinheit und der Hauskommunikationsanlage dient. Dies ist insbesondere dann vorteilhaft, wenn die Hauskommunikationsanlage nicht direkt mit der zentralen Datenverarbeitungseinheit verbunden werden kann, beispielsweise während der Erstinstallation oder wenn keine permanente Internetverbindung vorhanden ist.

Das mobile Gerät empfängt die Betriebs- und Konfigurationsdaten zunächst von der zentralen Datenverarbeitungseinheit und speichert diese lokal. Anschließend stellt es eine temporäre Verbindung zur Hauskommunikationsanlage her, um die gespeicherten Konfigurationsdaten auf die physikalischen Hauskommunikationsendgeräte zu übertragen. Die Verbindung kann drahtlos, beispielsweise über WLAN oder Bluetooth, oder kabelgebunden erfolgen.

In einer bevorzugten Ausführungsform überprüft das mobile Gerät vor der Übertragung, ob die gespeicherten Konfigurationsdaten mit den identifizierten physikalischen Hauskommunikationsendgeräten übereinstimmen. Falls keine direkte Verbindung zur zentralen Datenverarbeitungseinheit besteht, kann das mobile Gerät die Konfigurationsdaten zwischenspeichern und zu einem späteren Zeitpunkt mit der entfernten Datenverarbeitungseinheit synchronisieren.

Gemäß einer weiteren Ausführungsform umfasst das Verfahren einen Schritt zum Ersetzen eines physikalischen Hauskommunikationsendgeräts der Hauskommunikationsanlage, beispielsweise aufgrund eines Defekts oder einer gezielten Systemerweiterung.

Zunächst kann das neue Hauskommunikationsendgerät durch die Identifikationseinheit erfasst und anschließend in dem digitalen Abbild der Hauskommunikationsanlage einem zu ersetzenden Hauskommunikationsendgerät zugeordnet werden. Dies kann durch eine manuelle Auswahl durch den Benutzer erfolgen. Auf Grundlage dieser Zuordnung erkennt die zentrale Datenverarbeitungseinheit, dass ein Hauskommunikationsendgerät ersetzt wird, und veranlasst die Übertragung der Betriebs- und Konfigurationsdaten.

Nach der physischen Installation des neuen Hauskommunikationsendgeräts an der vorgesehenen Position kann die zentrale Datenverarbeitungseinheit die zuvor gespeicherten Betriebs- und Konfigurationsdaten automatisch auf das neu installierte Hauskommunikationsendgerät übertragen, sodass diese die Funktion des ersetzten Hauskommunikationsendgeräts übernimmt, ohne dass eine manuelle Neukonfiguration erforderlich ist.

In einer bevorzugten Ausführungsform kann die zentrale Datenverarbeitungseinheit zudem prüfen, ob das neue Hauskommunikationsendgerät technisch kompatibel mit dem ersetzten Hauskommunikationsendgerät ist. Falls das neue Hauskommunikationsendgerät über erweiterte oder geänderte Funktionen verfügt, kann die Benutzerschnittstelle eine Anpassung der Konfiguration vorschlagen oder dem Benutzer eine Auswahl möglicher Optionen bieten.

Gemäß einer weiteren Ausführungsform umfasst das Verfahren einen Schritt zum Ermitteln von relevanten Konfigurationsparametern für ein identifiziertes physikalisches Hauskommunikationsendgerät der Hauskommunikationsanlage.

Nach der Erfassung der eindeutigen Identifikation eines Hauskommunikationsendgeräts kann die zentrale Datenverarbeitungseinheit aus einer gespeicherten Datenbank die für diesen Typ des Hauskommunikationsendgeräts relevanten Konfigurationsparameter bestimmen. Dies ermöglicht eine gezielte Anpassung der Einstellungen für das jeweilige Hauskommunikationsendgerät durch den Benutzer.

Die ermittelten Konfigurationsparameter können über eine Benutzerschnittstelle angezeigt werden, sodass der Benutzer Einstellungen wie beispielsweise Ruftonzuordnungen, Lautstärke oder Berechtigungen für bestimmte Funktionen spezifizieren kann. Falls für den jeweiligen Hauskommunikationsendgerätetyp Standardwerte existieren, können diese initial vorgeschlagen werden, sodass der Benutzer diese nur bei Bedarf anpassen muss.

Nach der Bestätigung der Eingaben durch den Benutzer kann die zentrale Datenverarbeitungseinheit die Konfigurationsdaten entsprechend aktualisieren und im digitalen Abbild der Hauskommunikationsanlage speichern. Falls die Hauskommunikationsanlage bereits physikalisch installiert ist, kann die neue oder geänderte Konfiguration direkt auf das betroffene Hauskommunikationsendgerät übertragen werden.

Gemäß einer weiteren Ausführungsform umfasst das Verfahren einen Schritt zum Aktualisieren des digitalen Abbilds der Hauskommunikationsanlage basierend auf Benutzereingaben oder automatisch erkannten Konfigurationsänderungen.

Die zentrale Datenverarbeitungseinheit verwaltet das digitale Abbild der Hauskommunikationsanlage, welches die installierten physikalischen Hauskommunikationsendgeräte und deren aktuelle Konfiguration umfasst. Änderungen an der Konfiguration, die über die Benutzerschnittstelle vorgenommen werden, werden unmittelbar in das digitale Abbild übernommen. Der Benutzer kann beispielsweise Zuordnungen zwischen Ruftasten einer Türstation und Innenstationen ändern, Lautstärkeeinstellungen anpassen oder neue Berechtigungen für bestimmte Funktionen hinterlegen.

Darüber hinaus kann die zentrale Datenverarbeitungseinheit auch automatisch erkannte Änderungen in das digitale Abbild übernehmen. Falls beispielsweise ein neues Hauskommunikationsendgerät durch eine Identifikationseinheit erfasst oder ein bestehendes Hauskommunikationsendgerät ausgetauscht wurde, kann dies im digitalen Abbild reflektiert werden.

Die Änderungen im digitalen Abbild werden dem Benutzer über die Benutzerschnittstelle angezeigt, sodass er eine Übersicht über die aktuelle Konfiguration erhält und gegebenenfalls weitere Anpassungen vornehmen kann.

Gemäß einer weiteren Ausführungsform umfasst das Verfahren einen Schritt zum Aktualisieren des digitalen Abbilds der Hauskommunikationsanlage basierend auf Benutzereingaben oder automatisch erkannten Konfigurationsänderungen.

Die zentrale Datenverarbeitungseinheit verwaltet das digitale Abbild der Hauskommunikationsanlage, welches die installierten physikalischen Hauskommunikationsendgeräte und deren aktuelle Konfiguration umfasst. Änderungen an der Konfiguration, die über die Benutzerschnittstelle vorgenommen werden, werden unmittelbar in das digitale Abbild übernommen. Der Benutzer kann beispielsweise Zuordnungen zwischen Ruftasten einer Türstation und Innenstationen ändern, Lautstärkeeinstellungen anpassen oder neue Berechtigungen für bestimmte Funktionen hinterlegen.

Darüber hinaus kann die zentrale Datenverarbeitungseinheit auch automatisch erkannte Änderungen in das digitale Abbild übernehmen. Falls beispielsweise ein neues Hauskommunikationsendgerät durch eine Identifikationseinheit erfasst oder ein bestehendes Hauskommunikationsendgerät ausgetauscht wurde, kann dies im digitalen Abbild reflektiert werden.

Die Änderungen im digitalen Abbild werden dem Benutzer über die Benutzerschnittstelle angezeigt, sodass er eine Übersicht über die aktuelle Konfiguration erhält und gegebenenfalls weitere Anpassungen vornehmen kann. Falls die Hauskommunikationsanlage bereits physikalisch installiert ist, können die aktualisierten Konfigurationsdaten auf die betroffenen Hauskommunikationsendgeräte übertragen werden, sodass diese direkt die geänderten Einstellungen übernehmen.

Gemäß einer weiteren Ausführungsform umfasst das Verfahren einen Schritt zum Ermitteln von Abhängigkeiten zwischen den identifizierten Hauskommunikationsendgeräten der Hauskommunikationsanlage und Anpassen der Konfigurationsmöglichkeiten basierend auf diesen Abhängigkeiten.

Die Hauskommunikationsendgeräte der Hauskommunikationsanlage sind funktional miteinander verknüpft. Beispielsweise können Ruftasten einer Türstation mit bestimmten Innenstationen gekoppelt sein, oder ein Türöffner kann nur in Verbindung mit einer autorisierten Innenstation betätigt werden. Die zentrale Datenverarbeitungseinheit kann auf Basis der erfassten Hauskommunikationsendgeräte und ihrer bereits vorgenommenen Konfiguration ermitteln, welche Abhängigkeiten zwischen diesen bestehen.

Basierend auf diesen Abhängigkeiten können die verfügbaren Konfigurationsoptionen für den Benutzer angepasst werden. So kann beispielsweise verhindert werden, dass eine Türöffner-Funktion eines nicht autorisierten Hauskommunikationsendgeräts zugewiesen wird oder dass eine Innenstation mehreren Ruftasten gleichzeitig zugewiesen wird, falls dies aus technischer Sicht nicht zulässig ist.

Die angepassten Konfigurationsmöglichkeiten werden über die Benutzerschnittstelle angezeigt, sodass der Benutzer nur gültige Einstellungen vornehmen kann. Dies trägt dazu bei, Fehleingaben zu vermeiden und sicherzustellen, dass die Konfiguration der Hauskommunikationsanlage den technischen Anforderungen entspricht.

Gemäß einer weiteren Ausführungsform umfasst das Verfahren einen Schritt zum Vergleichen der physikalischen Installation der Hauskommunikationsanlage mit dem korrespondierenden digitalen Abbild in der zentralen Datenverarbeitungseinheit. Dabei wird überprüft, ob die tatsächlich installierten Hauskommunikationsendgeräte mit den im digitalen Abbild hinterlegten Hauskommunikationsendgeräte übereinstimmen. Falls eine Abweichung festgestellt wird, kann ein neues oder ausgetauschtes Hauskommunikationsendgerät identifiziert und zugeordnet werden. Auf diese Weise entfällt in bestimmten Fällen der manuelle Schritt zur Identifikation der Hauskommunikationsendgeräte durch eine separate Erfassungseinheit, da das neue physische Hauskommunikationsendgerät durch das System automatisch erkannt und in das digitale Abbild übernommen werden kann.

Nach der Erkennung des zusätzlichen oder ausgetauschten Hauskommunikationsendgeräts wird eine Zuordnung im digitalen Abbild der Hauskommunikationsanlage vorgenommen. Falls es sich um den Austausch eines bereits vorhandenen Hauskommunikationsendgeräts handelt, kann das System automatisch die zuvor gespeicherte Konfiguration des ersetzten Hauskommunikationsendgeräts vorschlagen. Alternativ kann dem Benutzer eine Konfigurationsoption bereitgestellt werden, um das neue Hauskommunikationsendgerät individuell anzupassen. Nach Abschluss der Konfiguration werden die entsprechenden Konfigurationsdaten an das erkannte Hauskommunikationsendgerät übertragen, wodurch diese in das bestehende System integriert wird. Gleichzeitig wird das digitale Abbild der Hauskommunikationsanlage aktualisiert, sodass es den tatsächlichen Installationszustand widerspiegelt.

Gemäß einer weiteren Ausführungsform umfasst das Verfahren eine Plausibilitätsprüfung der Konfigurationsparameter, bei der die vorgenommenen Einstellungen auf technische Konsistenz und mögliche Konflikte überprüft werden. Dabei können insbesondere technische Widersprüche erkannt werden, beispielsweise wenn eine Ruftaste mehreren inkompatiblen Innenstationen zugewiesen wurde oder eine Funktion eines nicht unterstützten Hauskommunikationsendgeräts zugeordnet wurde. Auch unzulässige Mehrfachzuweisungen lassen sich auf diese Weise identifizieren, etwa wenn eine Türöffner-Funktion gleichzeitig mehreren Steuergeräten zugewiesen wurde, obwohl dies sicherheitskritische Probleme verursachen könnte. Darüber hinaus kann die Plausibilitätsprüfung fehlende Konfigurationsparameter detektieren, beispielsweise wenn ein Hauskommunikationsendgerät im digitalen Abbild der Hauskommunikationsanlage vorhanden ist, jedoch keine vollständige Konfiguration erhalten hat.

Erkannte Fehler oder Konflikte werden dem Benutzer über eine Benutzerschnittstelle angezeigt. Dies ermöglicht eine frühzeitige Identifikation und Korrektur potenzieller Probleme, bevor die Konfiguration auf die physischen Hauskommunikationsendgeräte der Hauskommunikationsanlage übertragen wird.

Gemäß einer weiteren Ausführungsform kann das System basierend auf der Plausibilitätsprüfung mindestens eine Korrekturoption für erkannte Fehler ermitteln und dem Benutzer über eine Benutzerschnittstelle zur Verfügung stellen. Falls eine logische und technisch zulässige Korrekturmöglichkeit existiert, kann das System eine automatische Anpassung vorschlagen. Dies kann beispielsweise der Fall sein, wenn eine Mehrfachzuweisung durch eine Priorisierung aufgelöst werden kann oder wenn ein fehlender Parameter anhand vordefinierter Standardwerte ergänzt werden kann.

Alternativ kann das System dem Benutzer eine Auswahl verschiedener Konfigurationsmöglichkeiten vorschlagen, falls mehrere mögliche Korrekturen existieren. Ist eine automatische Anpassung nicht ohne weiteres möglich, kann die Benutzerschnittstelle den Benutzer auffordern, eine Entscheidung zu treffen, beispielsweise wenn ein unkonfiguriertes Hauskommunikationsendgerät einer bestimmten Funktion zugeordnet werden muss. Auf diese Weise wird sichergestellt, dass erkannte Fehler nicht nur angezeigt, sondern dem Benutzer aktiv Lösungsmöglichkeiten vorgeschlagen werden, um den Installations- und Konfigurationsprozess effizienter zu gestalten.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Darstellung eines Szenarios für eine Hauskommunikationsanlage gemäß einer Ausführungsform,
- Fig. 2: eine schematische Darstellung der zentralen Datenverarbeitungseinheit mit den wesentlichen funktionalen Komponenten gemäß einer Ausführungsform,
- Fig. 3: eine beispielhafte Darstellung einer Benutzerschnittstelle gemäß einer Ausführungsform,
- Fig. 4: ein Ablaufdiagramm, das die wesentlichen Schritte des Installationsverfahrens gemäß einer Ausführungsform veranschaulicht.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

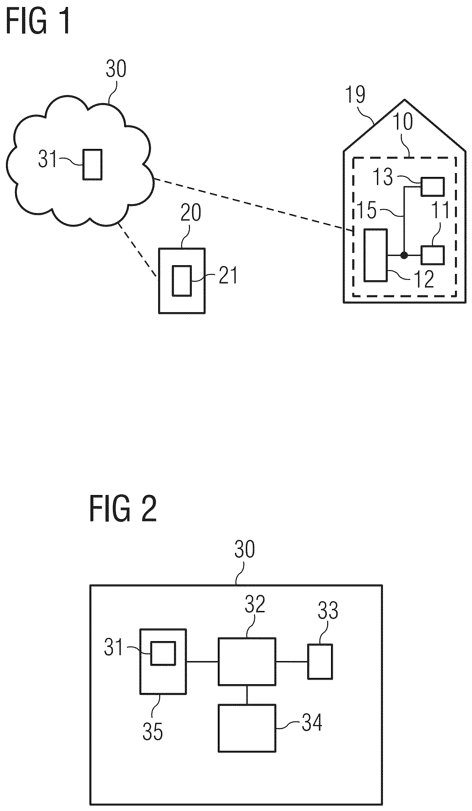

Figur 1 zeigt eine schematische Darstellung der Systemarchitektur für die Installation einer Hauskommunikationsanlage 10 in einem Gebäude 19. Die Hauskommunikationsanlage 10 umfasst eine Mehrzahl von physischen Hauskommunikationsendgeräten, darunter mindestens eine Türstation 11, eine oder mehrere Innenstationen 13 sowie optional einen mit der Tür verbundenen Schaltaktor 12 für den Türöffner. Die dargestellten Hauskommunikationsendgeräte sind beispielhaft gewählt und können je nach Installationsanforderungen variieren. Die Hauskommunikationsendgeräte 11-13 sind über ein lokales Netzwerk 15 miteinander gekoppelt, wobei sowohl kabelgebundene Verbindungen als auch drahtlose Verbindungen, beispielsweise über WLAN, genutzt werden können. Ebenso ist eine Mischform aus kabelgebundener und drahtloser Kommunikation möglich.

Zur Verwaltung der Hauskommunikationsanlage 10 ist eine zentrale Datenverarbeitungseinheit 30 vorgesehen, die sich vorzugsweise in einer entfernten Cloud-Umgebung oder auf einem zentralen Server befindet. Diese Datenverarbeitungseinheit 30 ist über eine Kommunikationsverbindung, beispielsweise eine Internetverbindung, mit der Hauskommunikationsanlage 10 gekoppelt und dient dazu, ein digitales Abbild 31 der Hauskommunikationsanlage 10 zu erstellen und zu verwalten. Über dieses digitale Abbild 31 können die Konfiguration und Installation der Hauskommunikationsanlage 10 vorbereitet, überwacht und optimiert werden.

Ein Benutzerterminal 20 ermöglicht den Zugriff auf eine Benutzerschnittstelle, die von der Datenverarbeitungseinheit 30 bereitgestellt wird. In der gezeigten Ausführungsform handelt es sich beim Benutzerterminal 20 vorzugsweise um einen Desktop-Computer, der sich beispielsweise im Büro eines Elektroinstallateurs oder einer anderen mit der vertrauten Person Konfiguration befindet. Alternativ können auch andere internetfähige Endgeräte, wie Tablet-Computer, Notebooks oder Mobiltelefone, verwendet werden, um auf die Benutzerschnittstelle zuzugreifen.

Die Benutzeroberfläche der Datenverarbeitungseinheit 30 erlaubt es einem Benutzer, zunächst eine grobe Planung der Hauskommunikationsanlage vorzunehmen, indem er Anforderungen definiert und eine Auswahl möglicher Hauskommunikationsendgeräte trifft. Basierend auf diesen Eingaben kann die mit der Konfiguration betraute Person, beispielsweise der Elektroinstallateur eine detaillierte Planung und Konfiguration der Anlage durchführen. Dies umfasst die endgültige Auswahl der benötigten physischen Hauskommunikationsendgeräte, die Zuweisung ihrer Funktionen und gegebenenfalls die Erstellung eines Angebots für den Endkunden.

Nach Abschluss der Planungsphase erfolgt die Beschaffung der für die Hauskommunikationsanlage 10 benötigten physikalischen Hauskommunikationsendgeräte 11-13. Diese Hauskommunikationsendgeräte liegen anschließend als eigenständige Bauteile vor, die der geplanten Hauskommunikationsanlage 10 zugeordnet und für die Installation vorbereitet werden müssen.

Um sicherzustellen, dass die richtige Konfiguration für jedes einzelne Hauskommunikationsendgerät 11-13 verwendet wird, erfolgt eine eindeutige Identifikation jedes physikalischen Hauskommunikationsendgeräts 11-13. Dies geschieht über eine Identifikationseinheit 21, die die eindeutige Identifikationskennung jedes Hauskommunikationsendgeräts 11-13 erfasst. Die Identifikation kann dabei auf unterschiedliche Weise erfolgen. Eine Möglichkeit besteht in der optischen Erfassung, bei der ein aufgedruckter QR-Code oder Barcode mit einer Kamera oder einem Scanner ausgelesen wird. In diesem Fall erfolgt die Verarbeitung der Bilddaten entweder direkt auf dem Gerät oder in der zentralen Datenverarbeitungseinheit 30. Alternativ kann die Identifikation elektronisch durch Auslesen einer in dem Hauskommunikationsendgerät 11-13 gespeicherten Kennung, beispielsweise über ein RFID- oder NFC-Modul, erfolgen. Falls weder eine optische noch eine elektronische Erfassung möglich ist, kann die Identifikation auch manuell erfolgen, indem ein Benutzer die Seriennummer oder eine andere eindeutige Kennung über eine Benutzerschnittstelle in die zentrale Datenverarbeitungseinheit 30 eingibt.

Die Identifikationseinheit 21 kann dabei entweder als eigenständiges Gerät ausgeführt sein, das mit der zentralen Datenverarbeitungseinheit 30 kommuniziert, oder als Bestandteil eines Benutzerterminals 20 integriert sein. In letzterem Fall kann sie beispielsweise in Form einer Kamera oder eines extern angeschlossenen Lesegeräts realisiert sein.

Nach der Erfassung der eindeutigen Identifikation eines Hauskommunikationsendgeräts erfolgt die Zuordnung des physischen Hauskommunikationsendgeräts zu einer virtuellen Komponente im digitalen Abbild 31 der Hauskommunikationsanlage 10. Falls das physische Hauskommunikationsendgerät bereits in der Planungsphase berücksichtigt wurde, kann die Identifikation dieser virtuellen Komponente direkt zugewiesen werden. Andernfalls wird eine neue virtuelle Komponente im digitalen Abbild erstellt, die den Eigenschaften de, erfassten physischen Hauskommunikationsendgerät entspricht.

Zusätzlich zur digitalen Zuordnung kann der vorgesehene Einbauort des jeweiligen Hauskommunikationsendgeräts 11-13 spezifiziert werden. Dieser Installationsort kann beispielsweise direkt in der Benutzerschnittstelle 34 angegeben und mit dem jeweiligen Hauskommunikationsendgerät 11-13 in der Datenverarbeitungseinheit 30 gespeichert werden. Um den späteren Installationsprozess zu erleichtern, kann der Installationsort zusätzlich auf der Verpackung des Hauskommunikationsendgeräts 11-13 oder direkt auf dem Hauskommunikationsendgerät 11-13 selbst vermerkt werden. Da die Identifikationskennzeichnung sich sowohl auf dem Hauskommunikationsendgerät 11-13 als auch auf der Verpackung befinden kann, ist es möglich, die Zuordnung vorzunehmen, ohne das Hauskommunikationsendgerät 11-13 bereits aus der Verpackung zu entnehmen.

Sobald alle physischen Hauskommunikationsendgeräte 11-13 erfasst und mit virtuellen Komponenten im digitalen Abbild 31 verknüpft wurden, kann die detaillierte Konfiguration der Hauskommunikationsanlage 10 erfolgen. Jede virtuelle Komponente kann dabei Konfigurationseigenschaften aufweisen, die den Einstellungsmöglichkeiten des korrespondierenden realen Hauskommunikationsendgeräts entsprechen. Dies ermöglicht es, für jedes Hauskommunikationsendgerät spezifische Einstellungen vorzunehmen, die von der späteren Betriebsweise der Hauskommunikationsanlage abhängen.

Neben der individuellen Konfiguration der Hauskommunikationsendgeräte 11-13 können Verknüpfungen zwischen den einzelnen Hauskommunikationsendgeräten 11-13 definiert werden. Beispielsweise kann festgelegt werden, welche Innenstationen 13 auf welche Ruftasten an einer Türstation 11 reagieren sollen oder welche Berechtigungen für die Nutzung bestimmter Funktionen bestehen.

Um Konfigurationsfehler zu vermeiden, kann optional eine Plausibilitätsprüfung durchgeführt werden. Dabei werden die vorgenommenen Einstellungen auf technische Widersprüche, unzulässige Mehrfachzuweisungen oder fehlende Parameter überprüft. Falls Konflikte erkannt werden, kann die Benutzerschnittstelle 34 entsprechende Warnhinweise oder Korrekturoptionen anzeigen, sodass der Benutzer die Konfiguration anpassen kann.

Darüber hinaus besteht die Möglichkeit, eine Simulation der konfigurierten Hauskommunikationsanlage 10 im digitalen Abbild 31 durchzuführen. Dies ermöglicht es dem Benutzer, das Verhalten der Hauskommunikationsanlage basierend auf der aktuellen Konfiguration zu überprüfen und gegebenenfalls Anpassungen vorzunehmen, bevor die Konfiguration auf die physischen Hauskommunikationsendgeräte 11-13 übertragen wird.

Nach Abschluss der Konfiguration und der Erstellung des digitalen Abbilds 31 erfolgt der physische Einbau der Hauskommunikationsanlage 10. Die zuvor erfassten und zugeordneten Hauskommunikationsendgeräte 11-13 werden an den vorgesehenen Installationsorten in dem Gebäude 19 montiert und mit dem Netzwerk 15 sowie gegebenenfalls mit einer Stromversorgung verbunden.

Da sämtliche Konfigurationsarbeiten bereits vorab in der Datenverarbeitungseinheit 30 durchgeführt wurden, erfordert der physische Einbau keine speziellen Kenntnisse zur Konfiguration der Anlage. Dies ermöglicht es, die Installation durch weniger geschultes Personal oder durch den Endkunden selbst durchführen zu lassen, während die eigentliche Systemkonfiguration durch Fachkräfte vorgenommen wurde. Insbesondere ist es nicht erforderlich, an den einzelnen Hauskommunikationsendgeräten 11-13 manuelle Einstellungen vorzunehmen oder Konfigurationsdaten vor Ort einzugeben.

Sobald die physische Installation abgeschlossen ist und die Hauskommunikationsanlage 10 betriebsbereit ist, kann die vorbereitete Konfiguration auf die installierten Hauskommunikationsendgeräte 11-13 übertragen werden.

Nach der erfolgreichen Installation und Aktivierung der Hauskommunikationsanlage 10 erfolgt die Übertragung der zuvor erstellten Konfigurationsdaten aus der Datenverarbeitungseinheit 30 auf die installierten Hauskommunikationsendgeräte 11-13. Eine erste Möglichkeit zur Übertragung der Konfigurationsdaten besteht darin, dass die Hauskommunikationsanlage 10 eine direkte Datenverbindung zur Datenverarbeitungseinheit 30 herstellt. Dies kann beispielsweise über eine Internetverbindung erfolgen, wenn die Hauskommunikationsanlage in das lokale Netzwerk des Gebäudes 19 integriert ist und über einen Router mit dem Internet verbunden wird.

Sobald die Verbindung zur Datenverarbeitungseinheit 30 hergestellt ist, können die Konfigurationsdaten auf die einzelnen Hauskommunikationsendgeräte 11-13 übertragen werden. Dabei sind zwei Varianten möglich:
In einer ersten Variante kommuniziert jedes installierte physische Hauskommunikationsendgerät 11-13 direkt mit der Datenverarbeitungseinheit 30 und ruft ihre individuellen Konfigurationsdaten eigenständig ab. Dies erfordert, dass jedes Hauskommunikationsendgerät 11-13 über eine geeignete Kommunikationsschnittstelle verfügt, um eine Netzwerkverbindung mit der Datenverarbeitungseinheit aufzubauen.

Alternativ kann eines der installierten Hauskommunikationsendgeräte 11-13 als zentrale oder Masterkomponente fungieren, vorzugsweise die Türstation 11. In dieser Variante stellt die Masterkomponente die Verbindung zur Datenverarbeitungseinheit 30 her, empfängt die vollständigen Konfigurationsdaten für die gesamte Hauskommunikationsanlage 10 und verteilt diese innerhalb des lokalen Netzwerks 15 an die weiteren Hauskommunikationsendgeräte 12, 13. Nachdem die Konfigurationsdaten erfolgreich auf die Hauskommunikationsendgeräte 11-13 übertragen wurden, werden diese aktiviert, sodass die Hauskommunikationsanlage 10 entsprechend der erstellten Konfiguration arbeitet.

Alternativ zur direkten Übertragung der Konfigurationsdaten aus der Datenverarbeitungseinheit 30 an die installierten Hauskommunikationsendgeräte 11-13 besteht die Möglichkeit, die Konfigurationsdaten zunächst auf ein mobiles Gerät zu übertragen und diese anschließend vor Ort auf die Hauskommunikationsanlage 10 zu übertragen.

Hierzu werden die Konfigurationsdaten nach Abschluss der Konfiguration in der Datenverarbeitungseinheit 30 zunächst über eine Netzwerkverbindung auf ein mobiles Gerät, beispielsweise ein Smartphone, ein Tablet oder einen Laptop, geladen. Dies kann über eine Internetverbindung erfolgen, sodass das mobile Gerät die Daten abrufen und zwischenspeichern kann.

Sobald sich das mobile Gerät am Installationsort befindet, kann die dort gespeicherte Konfiguration auf die installierte Hauskommunikationsanlage 10 übertragen werden. Hierzu kann eine drahtlose Kommunikationsverbindung zwischen dem mobilen Gerät und der Hauskommunikationsanlage 10 genutzt werden, beispielsweise über WLAN oder Bluetooth.

In dieser Variante ist es erforderlich, dass mindestens eines der physischen Hauskommunikationsendgeräte 11-13 der Hauskommunikationsanlage über eine entsprechende Kommunikationsschnittstelle verfügt. Vorzugsweise kann die Türstation 11 als zentrale Schnittstelle dienen, die eine direkte Verbindung mit dem mobilen Gerät herstellt, die Konfigurationsdaten empfängt und diese dann an die weiteren Hauskommunikationsendgeräte 12, 13 im lokalen Netzwerk 15 weiterleitet.

Diese Variante bietet insbesondere dann Vorteile, wenn die Hauskommunikationsanlage 10 nicht über eine direkte Internetverbindung verfügt oder eine solche Verbindung erst zu einem späteren Zeitpunkt hergestellt werden soll. Durch die Möglichkeit der lokalen Übertragung der Konfigurationsdaten kann die Hauskommunikationsanlage unabhängig von einer bestehenden Internetverbindung vollständig konfiguriert und in Betrieb genommen werden.

Figur 2 zeigt schematisch eine Datenverarbeitungseinheit 30, die zur Verwaltung und Installation einer Hauskommunikationsanlage 10 eingesetzt wird. Die Datenverarbeitungseinheit 30 kann als entfernte Serverlösung oder als Cloud-Dienst ausgeführt sein, über den ein Benutzer die Konfiguration einer Hauskommunikationsanlage 10 vorbereitet, verwaltet und auf die installierten Hauskommunikationsendgeräte überträgt.

Die Datenverarbeitungseinheit 30 umfasst eine Verarbeitungseinheit 32, die zur Erstellung und Verwaltung eines digitalen Abbilds 31 der Hauskommunikationsanlage 10 dient. Dieses digitale Abbild 31 enthält Informationen über die physischen Hauskommunikationsendgeräte 11-13, ihre Eigenschaften und Konfigurationsparameter. Während der Installation werden die identifizierten Hauskommunikationsendgeräte 11-13 dem digitalen Abbild 31 zugeordnet und daraufhin die Konfigurationsdaten generiert.

Die Speichereinheit 35 ist dazu ausgelegt, das digitale Abbild 31 sowie alle zugehörigen Betriebs- und Konfigurationsdaten zu speichern. Dadurch bleibt die Konfiguration der Hauskommunikationsanlage 10 auch nach der Installation erhalten und kann später bei Wartung oder Änderungen angepasst werden.

Über die Kommunikationsschnittstelle 33 kann die Datenverarbeitungseinheit 30 mit verschiedenen Geräten kommunizieren. Dazu gehören insbesondere die Hauskommunikationsanlage 10 selbst, das Benutzerterminal 20 und gegebenenfalls mobile Geräte, die zur Übertragung der Konfiguration verwendet werden. Die Kommunikation kann über eine Internetverbindung erfolgen, sodass Konfigurationsdaten aus der Ferne bereitgestellt werden können. Alternativ können Konfigurationsdaten zunächst auf einem mobilen Gerät gespeichert und von dort aus auf die Hauskommunikationsanlage 10 übertragen werden.

Die Benutzerschnittstelle 34 ermöglicht die Interaktion mit der Datenverarbeitungseinheit 30 über das Benutzerterminal 20. In der Planungs- und Installationsphase dient sie dazu, die erfassten physischen Hauskommunikationsendgeräte zu einem vollständigen digitalen Abbild 31 zusammenzuführen und eine geeignete Konfiguration zu erstellen. Nach Abschluss der Installation können die erstellten Konfigurationsdaten über die Kommunikationsschnittstelle 33 an die Hauskommunikationsanlage 10 übermittelt werden.

Figur 2 veranschaulicht damit die zentrale Rolle der Datenverarbeitungseinheit 30 bei der Planung, Konfiguration und Inbetriebnahme einer Hauskommunikationsanlage 10. Während der Installation werden die realen Hauskommunikationsendgeräte mit dem digitalen Abbild 31 synchronisiert, sodass eine automatisierte und fehlerreduzierte Einrichtung der Anlage erfolgen kann.

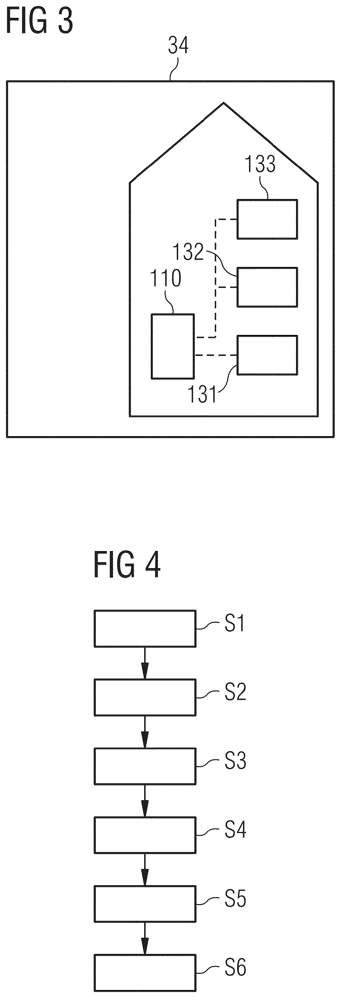

Figur 3 zeigt eine schematische Darstellung der Benutzerschnittstelle 34, die das digitale Abbild 31 der Hauskommunikationsanlage 10 während der Installation veranschaulicht. Die Benutzerschnittstelle 34 wird auf dem Benutzerterminal 20 angezeigt und ermöglicht die Verwaltung und Konfiguration der Hauskommunikationsanlage 10.

Auf der Benutzerschnittstelle 34 werden die physikalischen Hauskommunikationsendgeräte 11-13 durch entsprechende virtuelle Komponenten 110, 131-133 repräsentiert. Die Zuordnung der physikalischen Hauskommunikationsendgeräte zu den virtuellen Entsprechungen erfolgt durch das Erfassen der eindeutigen Identifikation der jeweiligen Hauskommunikationsendgeräte. Nachdem ein Hauskommunikationsendgerät identifiziert wurde, kann es in das digitale Abbild 31 übernommen und einer virtuellen Komponente zugeordnet werden.

Die Benutzerschnittstelle 34 ermöglicht es dem Benutzer, den vorgesehenen Einbauort eines identifizierten Hauskommunikationsendgeräts festzulegen. Dies kann auf verschiedene Weise erfolgen, beispielsweise durch manuelle Texteingabe, Auswahl aus einem vordefinierten Menü oder durch Verschieben eines Symbols innerhalb einer grafischen Darstellung der Hauskommunikationsanlage. Die Darstellung kann je nach Systemkonfiguration schematisch oder realitätsnah ausgeführt sein.

Durch das schrittweise Einlesen der Identifikationen und das sukzessive Ergänzen der virtuellen Komponenten entsteht nach und nach ein vollständiges digitales Abbild 31 der Hauskommunikationsanlage 10. Dieses Abbild bildet die Grundlage für die weitere Konfiguration der Anlage und stellt sicher, dass alle physischen Hauskommunikationsendgeräte korrekt erkannt und an der richtigen Position installiert werden.

Figur 3 zeigt eine beispielhafte grafische Darstellung des digitalen Abbilds der Hauskommunikationsanlage 10 auf der Benutzerschnittstelle 34. In dieser Darstellung repräsentiert das virtuelle Element 110 eine Türstation, die mit mehreren Ruftasten ausgestattet sein kann, während die virtuellen Elemente 131, 132 und 133 Innenstationen darstellen.

Nach der Zuordnung der physikalischen Hauskommunikationsendgeräte zu den virtuellen Entsprechungen im digitalen Abbild 31 kann der Benutzer über die Benutzerschnittstelle 34 die Konfiguration der Hauskommunikationsanlage anpassen. Eine wesentliche Funktion besteht darin, die Zuordnung zwischen den virtuellen Komponenten zu definieren. Beispielsweise kann ein erster Klingelknopf der Türstation 110 einer einzelnen Innenstation 131 zugewiesen werden, während ein zweiter Klingelknopf dieser Türstation 110 mit den beiden weiteren Innenstationen 132 und 133 verknüpft wird. Dadurch wird festgelegt, welche Innenstation bei Betätigung einer bestimmten Ruftaste ein akustisches oder visuelles Signal empfängt.

Neben dieser grundlegenden Zuordnung kann der Benutzer weitere Parameter für die einzelnen virtuellen Komponenten anpassen. So lässt sich für jede Innenstation individuell festlegen, mit welchem Signal eine eingehende Betätigung der Ruftaste angezeigt wird. Zudem kann die Lautstärke der Signalisierung abhängig von der Tageszeit variieren, um beispielsweise während der Nachtstunden gedämpft zu sein. Darüber hinaus besteht die Möglichkeit, eingehende Signale einer Innenstation automatisch an eine andere Innenstation oder an ein mobiles Endgerät weiterzuleiten. Auch zeitabhängige Einstellungen können vorgenommen werden, sodass bestimmte Ruftasten während festgelegter Zeiträume deaktiviert sind oder die Anlage zwischen unterschiedlichen Konfigurationssätzen wechselt.

Durch diese Konfigurationsmöglichkeiten wird die Hauskommunikationsanlage flexibel an die individuellen Anforderungen der Nutzer angepasst, ohne dass vor Ort eine aufwendige manuelle Konfiguration der einzelnen Hauskommunikationsendgeräte erforderlich ist.

Das digitale Abbild 31 stellt eine virtuelle Repräsentation der realen Hauskommunikationsanlage 10 dar und ermöglicht es dem Benutzer, die konfigurierte Funktionalität der Anlage bereits vor der tatsächlichen Installation zu überprüfen. Eine Möglichkeit besteht darin, dass die Benutzerschnittstelle 34 eine Simulation bereitstellt, die das Verhalten der Hauskommunikationsanlage in Abhängigkeit von den vorgenommenen Einstellungen veranschaulicht. Beispielsweise kann der Benutzer durch Betätigung eines virtuellen Klingelknopfs innerhalb der Darstellung überprüfen, welche Innenstationen daraufhin ein Signal empfangen und wie sich dieses akustisch oder visuell äußert. Dadurch kann vor der endgültigen Übertragung der Konfigurationsdaten sichergestellt werden, dass alle gewünschten Funktionen korrekt definiert wurden.

Zusätzlich kann das System eine Plausibilitätsprüfung der Konfiguration durchführen, um potenzielle Unstimmigkeiten oder fehlende Einstellungen zu identifizieren. Eine solche Prüfung kann beispielsweise feststellen, ob jeder in der Konfiguration definierte Klingelknopf einer oder mehreren Innenstationen zugeordnet wurde oder ob Konfigurationsparameter unvollständig oder widersprüchlich sind. Zudem kann geprüft werden, ob für alle Hauskommunikationsendgeräte die erforderlichen Einstellungen festgelegt wurden und ob keine unzulässigen Mehrfachzuweisungen oder widersprüchlichen Regeln vorliegen. Falls die Plausibilitätsprüfung Unstimmigkeiten erkennt, können diese dem Benutzer über die Benutzerschnittstelle 34 angezeigt werden, sodass eine Anpassung der Konfiguration erfolgen kann, bevor diese an die Hauskommunikationsanlage übertragen wird.

Durch die Möglichkeit der Simulation und Plausibilitätsprüfung wird die Fehleranfälligkeit bei der Einrichtung der Hauskommunikationsanlage reduziert, da potenzielle Probleme bereits vor der Installation erkannt und behoben werden können.

Nachdem die Hauskommunikationsanlage installiert und konfiguriert wurde, kann es erforderlich sein, einzelne Parameter der Konfiguration zu ändern. Eine solche Änderung kann über die Benutzerschnittstelle 34 der Datenverarbeitungseinheit 30 erfolgen. Der Benutzer hat dabei die Möglichkeit, auf das bestehende digitale Abbild 31 der Hauskommunikationsanlage zuzugreifen und gezielt Modifikationen vorzunehmen. So kann beispielsweise die Zuordnung zwischen einer Türstation 110 und den Innenstationen 131-133 angepasst werden, falls eine bestehende Innenstation durch eine neue ersetzt wird oder eine zusätzliche Innenstation in den Rufkreis einer bestimmten Klingeltaste aufgenommen werden soll. Ebenso ist es möglich, Klingeltöne, Lautstärkeeinstellungen oder zeitabhängige Regeln zu ändern, um beispielsweise Ruhezeiten festzulegen oder die Lautstärke in bestimmten Zeiträumen automatisch anzupassen. Auch die Türöffnungsrechte lassen sich nachträglich modifizieren, sodass etwa einem neuen Bewohner Zugang gewährt oder bestehenden Personen temporärer oder dauerhafter Zugang entzogen werden kann.

Nach der Modifikation wird die aktualisierte Konfiguration über eine Netzwerkverbindung von der Datenverarbeitungseinheit 30 auf die Hauskommunikationsanlage 10 übertragen. Dies kann entweder durch eine direkte Internetverbindung zwischen der Hauskommunikationsanlage und der Datenverarbeitungseinheit oder, falls keine permanente Internetverbindung vorhanden ist, durch eine Übertragung über ein mobiles Endgerät erfolgen, das die modifizierte Konfiguration empfängt und lokal an die Hauskommunikationsanlage überträgt.

Zusätzlich kann eine Überprüfung der neuen Konfiguration erfolgen, um sicherzustellen, dass keine unzulässigen Mehrfachzuweisungen oder Konflikte in der geänderten Konfiguration entstehen. Falls erforderlich, kann das System den Benutzer auf erkannte Probleme hinweisen und mögliche Korrekturoptionen vorschlagen, die über die Benutzerschnittstelle angezeigt werden.

Falls ein Hauskommunikationsendgerät der Hauskommunikationsanlage 10 ersetzt werden muss, beispielsweise aufgrund eines Defekts oder einer Umstrukturierung der Anlage, kann dies durch die Erfassung des neuen Hauskommunikationsendgeräts und dessen Zuordnung im digitalen Abbild 31 der Hauskommunikationsanlage in der zentralen Datenverarbeitungseinheit 30 erfolgen. Hierzu wird zunächst das neue Hauskommunikationsendgerät physisch bereitgestellt und ihre eindeutige Identifikation mit der Identifikationseinheit 21 erfasst. Diese erfasste Identifikation wird daraufhin in der Datenverarbeitungseinheit 30 verarbeitet, um das neue Hauskommunikationsendgerät der zu ersetzenden Komponente im digitalen Abbild zuzuordnen.

Durch diese Zuordnung wird sichergestellt, dass die neue Komponente automatisch die Konfigurationsdaten der ersetzten Hauskommunikationsendgerät erhält, sodass keine erneute manuelle Konfiguration erforderlich ist. Nach der physischen Installation des neuen Hauskommunikationsendgeräts kann die aktualisierte Konfiguration auf die Hauskommunikationsanlage 10 übertragen werden. Hierfür kann entweder eine direkte Datenverbindung zwischen der Hauskommunikationsanlage und der Datenverarbeitungseinheit genutzt werden, beispielsweise über eine Internetverbindung, oder die Konfiguration kann zunächst auf ein mobiles Gerät übertragen und von diesem aus lokal auf die Hauskommunikationsanlage überspielt werden.

Sobald das neue Hauskommunikationsendgerät die zugewiesene Konfiguration empfangen hat, kann sie ihre vorgesehene Funktion übernehmen. Dadurch wird der Austausch von Hauskommunikationsendgeräten erheblich vereinfacht, da die bestehende Konfiguration automatisch auf das neue Hauskommunikationsendgerät übertragen wird und der Installationsaufwand minimiert bleibt.

Neben der initialen Installation und Konfiguration der Hauskommunikationsanlage 10 besteht die Möglichkeit, spätere Änderungen an der physikalischen Installation automatisch zu detektieren. Hierbei kann das tatsächliche Vorhandensein von Hauskommunikationsendgeräten 11-13 mit dem digitalen Abbild 31 der Hauskommunikationsanlage in der zentralen Datenverarbeitungseinheit 30 verglichen werden. Dies kann entweder durch aktive Abfragen an die in der Hauskommunikationsanlage installierten Hauskommunikationsendgeräte oder durch Reaktionen der Hauskommunikationsendgeräte selbst erfolgen.

Falls ein neues Hauskommunikationsendgerät erkannt wird, das im digitalen Abbild bisher nicht registriert ist, kann dieses als zusätzliches oder ersetzendes Hauskommunikationsendgerät identifiziert werden. Ein zu ersetzendes Hauskommunikationsendgerät kann beispielsweise erkannt werden, wenn ein zuvor vorhandenes Hauskommunikationsendgerät nicht mehr reagiert, jedoch ein neues Hauskommunikationsendgerät mit einer gültigen Identifikation an deren Stelle vorhanden ist.

Nach der Erkennung eines zusätzlichen oder zu ersetzenden Hauskommunikationsendgeräts kann die zentrale Datenverarbeitungseinheit 30 eine Zuordnung zu dem digitalen Abbild der Hauskommunikationsanlage vorschlagen. Falls es sich um ein ersetzendes Hauskommunikationsendgerät handelt, könnte die vorherige Konfiguration des ausgetauschten Hauskommunikationsendgeräts automatisch auf das neue übertragen werden. Bei einem zusätzlichen Hauskommunikationsendgerät können dem Benutzer Konfigurationsoptionen über die Benutzerschnittstelle 34 bereitgestellt werden, um das neue Hauskommunikationsendgerät in das bestehende System zu integrieren.

Nach Abschluss der Zuordnung und Konfiguration kann das digitale Abbild 31 entsprechend aktualisiert werden, sodass es erneut eine vollständige Repräsentation der realen Installation darstellt.

Zusätzlich zur Erkennung von physikalischen Änderungen in der Installation kann die Hauskommunikationsanlage 10 auch eine Funktionsüberprüfung durchführen. Dabei können verschiedene Parameter erfasst und mit erwarteten Werten verglichen werden. So könnte beispielsweise eine Netzwerkverbindung getestet werden, um festzustellen, ob alle physischen Hauskommunikationsendgeräte 11-13 ordnungsgemäß miteinander kommunizieren, oder ob es zu Verbindungsproblemen kommt, etwa durch eine instabile WLAN-Verbindung oder fehlende Erreichbarkeit einzelner Hauskommunikationsendgeräte.

Darüber hinaus wäre es möglich, auch andere systemkritische Funktionen zu überwachen, beispielsweise die Reaktionszeiten der Hauskommunikationsendgeräte oder die korrekte Übertragung von Audiosignalen. Falls Unregelmäßigkeiten festgestellt werden, kann die zentrale Datenverarbeitungseinheit 30 eine entsprechende Meldung an die Benutzerschnittstelle 34 übermitteln. Diese Meldung könnte je nach Art des erkannten Problems beispielsweise als Warnhinweis oder Fehleranzeige erscheinen und dem Benutzer gezielte Informationen zur möglichen Behebung bereitstellen.

Durch eine solche kontinuierliche oder in regelmäßigen Intervallen durchgeführte Funktionsüberprüfung kann sichergestellt werden, dass die Hauskommunikationsanlage zuverlässig arbeitet. Gleichzeitig kann der Benutzer frühzeitig auf potenzielle Probleme aufmerksam gemacht werden, um diese gegebenenfalls vor einer Beeinträchtigung des Betriebs zu beheben.

Figur 4 zeigt ein schematisches Ablaufdiagramm eines Verfahrens zur Installation einer Hauskommunikationsanlage. In einem ersten Schritt S1 wird eine Mehrzahl von physischen Hauskommunikationsendgeräten 11-13 der Hauskommunikationsanlage bereitgestellt. Anschließend erfolgt in Schritt S2 das Erfassen einer eindeutigen Identifikation jedes physischen Hauskommunikationsendgeräts durch eine Identifikationseinheit 21. Die erfassten Identifikationen werden daraufhin in Schritt S3 einem digitalen Abbild 31 der Hauskommunikationsanlage in der zentralen Datenverarbeitungseinheit 30 zugeordnet.

Nach der Identifikation und Zuordnung der Hauskommunikationsendgeräte erfolgt in Schritt S4 die physische Installation der Hauskommunikationsendgeräten an den zugeordneten Positionen innerhalb des Gebäudes 19. Sobald die physikalische Installation abgeschlossen ist, werden in Schritt S5 Betriebs- und Konfigurationsdaten basierend auf dem digitalen Abbild 31 generiert und bereitgestellt. In Schritt S6 werden die bereitgestellten Betriebs- und Konfigurationsdaten auf die installierten Hauskommunikationsendgeräte 11-13 übertragen. Dies kann entweder über eine direkte Netzwerkverbindung zwischen der Hauskommunikationsanlage 10 und der zentralen Datenverarbeitungseinheit 30 oder durch eine temporäre Verbindung über ein mobiles Endgerät erfolgen. Schließlich wird die Hauskommunikationsanlage 10 mit den empfangenen Betriebs- und Konfigurationsdaten aktiviert und in Betrieb genommen.

Die vorliegende Erfindung betrifft ein Verfahren zur Installation einer Hauskommunikationsanlage, bei dem eine Mehrzahl von physischen Hauskommunikationsendgeräten bereitgestellt, identifiziert und einem digitalen Abbild der Hauskommunikationsanlage in einer zentralen Datenverarbeitungseinheit zugeordnet werden. Nach der physischen Installation der Hauskommunikationsendgeräte werden Betriebs- und Konfigurationsdaten basierend auf dem digitalen Abbild generiert, bereitgestellt und auf die installierten Hauskommunikationsendgeräte übertragen, sodass die Hauskommunikationsanlage gemäß den Konfigurationsdaten aktiviert wird. Die Übertragung der Konfigurationsdaten kann direkt über eine Netzwerkverbindung zwischen der Hauskommunikationsanlage und der zentralen Datenverarbeitungseinheit oder alternativ über ein mobiles Gerät erfolgen. Durch das digitale Abbild wird eine effiziente Planung und Konfiguration der Hauskommunikationsanlage ermöglicht, wodurch der Installationsprozess optimiert und potenzielle Fehler reduziert werden können.

## Patentansprüche

1. Verfahren zur Installation einer Hauskommunikationsanlage (10), umfassend die Schritte:
Bereitstellen (S1) einer Mehrzahl von physischen Hauskommunikationsendgeräten (11-13) der Hauskommunikationsanlage (10);
Erfassen (S2) einer eindeutigen Identifikation jedes Hauskommunikationsendgeräts (11-13) durch eine Identifikationseinheit (21);
Zuordnen (S3) der erfassten Hauskommunikationsendgeräte (11-13) zu einem digitalen Abbild (31) der Hauskommunikationsanlage (10) in einer zentralen Datenverarbeitungseinheit (30);
Physische Installation (S4) der Hauskommunikationsendgeräte (11- 13) an den zugeordneten Positionen gemäß dem digitalen Abbild (31);
Bereitstellen (S5) von Betriebs- und Konfigurationsdaten für die installierten Hauskommunikationsendgeräte (11-13) basierend auf dem digitalen Abbild (31); und
Übertragen (S6) der Betriebs- und Konfigurationsdaten auf die installierten Hauskommunikationsendgeräte (11-13) und Aktivieren der Hauskommunikationsanlage (10).

2. Verfahren nach Anspruch 1,
**dadurch gekennzeichnet,**
**dass** das Übertragen (S6) der Betriebs- und Konfigurationsdaten auf die installierten Hauskommunikationsendgeräte (11-13) innerhalb der Hauskommunikationsanlage (10) unter Verwendung lokaler Netzwerkverbindungen (15) erfolgt.

3. Verfahren nach einem der vorstehenden Ansprüche,
**dadurch gekennzeichnet,**
**dass** die eindeutige Identifikation der physischen Hauskommunikationsendgeräte (11-13) durch eine Identifikationseinheit (ein 20) erfolgt, die die eindeutige Identifikation eines physikalischen Hauskommunikationsendgeräts (11-13) optisch, elektronisch und/oder manuell erfasst.

4. Verfahren nach Anspruch 3,
**dadurch gekennzeichnet,**
**dass** die Identifikation eines physikalischen Hauskommunikationsendgeräts (11-13) auf zumindest eine der folgenden Arten erfasst wird:
optisch durch Scannen eines QR-Codes oder Barcodes mittels eines Scanners oder durch Aufnahme eines Bildes mit einer Kamera, wobei die Verarbeitung des aufgenommenen Bildes entweder lokal oder in der zentralen Datenverarbeitungseinheit (30) erfolgt;
elektronisch durch Auslesen eines RFID-Chips oder einer NFC-Kennung;
manuell durch Eingabe eines eindeutigen Identifikationsschlüssels, insbesondere einer Seriennummer.

5. Verfahren nach einem der vorstehenden Ansprüche,
**dadurch gekennzeichnet,**
**dass** die Übertragung (S6) der Betriebs- und Konfigurationsdaten auf die installierten Hauskommunikationsendgeräte (11-13) über eine Netzwerkverbindung zu der zentralen Datenverarbeitungseinheit (30) oder durch eine temporäre Verbindung mit einem mobilen Gerät erfolgt.

6. Verfahren nach Anspruch 5, umfassend die weiteren Schritte:
Senden der Betriebs- und Konfigurationsdaten durch die zentrale Datenverarbeitungseinheit (30);
Empfangen der Betriebs- und Konfigurationsdaten für ein Hauskommunikationsendgerät (11-13) der Hauskommunikationsanlage (10) direkt durch die jeweilige physikalische Komponente;
Konfigurieren jedes physischen Hauskommunikationsendgeräts (11-13) basierend auf den empfangenen Betriebs- und Konfigurationsdaten.

7. Verfahren nach Anspruch 5, umfassend die weiteren Schritte:
Senden der Betriebs- und Konfigurationsdaten durch die zentrale Datenverarbeitungseinheit (30) an ein als Master-Komponente ausgebildetes oder konfiguriertes Hauskommunikationsendgerät (11-13) der Hauskommunikationsanlage (10);
Empfangen der Betriebs- und Konfigurationsdaten durch die Master-Komponente;
Weiterleiten der empfangenen Betriebs- und Konfigurationsdaten durch die Master-Komponente an eine Mehrzahl weiterer physischer Hauskommunikationsendgeräte (11-13) der Hauskommunikationsanlage (10);
Konfigurieren der Hauskommunikationsendgeräte (11-13) basierend auf den empfangenen Betriebs- und Konfigurationsdaten.

8. Verfahren nach einem der vorhergehenden Ansprüche, umfassend die weiteren Schritte:
Erfassen eines neuen physischen Hauskommunikationsendgeräts der Hauskommunikationsanlage (10) anhand einer eindeutigen Identifikation;
Zuordnen des neuen physischen Hauskommunikationsendgeräts zu einer bestehenden, zu ersetzenden Komponente im digitalen Abbild (31) der Hauskommunikationsanlage (10);
Physikalische Installation des neuen Hauskommunikationsendgeräts in der Hauskommunikationsanlage (10);
Übertragen der gespeicherten Betriebs- und Konfigurationsdaten des ersetzten Hauskommunikationsendgeräts auf das neu installierte Hauskommunikationsendgerät durch die zentrale Datenverarbeitungseinheit (30).

9. Verfahren nach einem der vorhergehenden Ansprüche, umfassend die weiteren Schritte:
Identifizieren eines physischen Hauskommunikationsendgeräts (11-13) der Hauskommunikationsanlage (10) unter Verwendung der erfassten eindeutigen Identifikation;
Ermitteln von für das identifizierte Hauskommunikationsendgerät (11-13) relevanten Konfigurationsparametern;
Anzeigen der konfigurierbaren Parameter und Empfangen von Eingaben eines Benutzers für diese Parameter unter Verwendung einer Benutzerschnittstelle (34);
Erstellen von Betriebs- und Konfigurationsdaten auf Basis der spezifizierten Parameter.

10. Verfahren nach einem der vorstehenden Ansprüche,
**dadurch gekennzeichnet,**
**dass** das digitale Abbild (31) der Hauskommunikationsanlage (10) basierend auf Benutzereingaben in einer Benutzerschnittstelle (34) oder Konfigurationsänderungen in der zentralen Datenverarbeitungseinheit (30) aktualisiert und entsprechend in der Benutzerschnittstelle (34) angezeigt wird.

11. Verfahren nach einem der vorhergehenden Ansprüche, umfassend die weiteren Schritte:
Ermitteln von Abhängigkeiten zwischen den identifizierten physischen Hauskommunikationsendgeräten (11-13) der Hauskommunikationsanlage;
Anpassen der Konfigurationsmöglichkeiten der Hauskommunikationsendgeräte (11-13) basierend auf den ermittelten Abhängigkeiten;
Ausgeben der angepassten Konfigurationsmöglichkeiten auf der Benutzerschnittstelle (34).

12. Verfahren nach einem der vorhergehenden Ansprüche, umfassend die weiteren Schritte:
Vergleichen der physikalischen Installation der Hauskommunikationsanlage (10) mit dem korrespondierenden digitalen Abbild (31) in der zentralen Datenverarbeitungseinheit (30) und Detektieren einer Veränderung an der physikalischen Installation der Hauskommunikationsanlage (10);
Identifizieren einer zusätzlichen oder ausgetauschten physischen Komponente;
Zuordnen des erkannten Hauskommunikationsendgeräts zum digitalen Abbild (31) der Hauskommunikationsanlage (10) in der zentralen Datenverarbeitungseinheit (30);
Bereitstellen einer Konfigurationsoption für die erkannte Komponente;
Übertragen der Konfigurationsdaten auf das erkannte Hauskommunikationsendgerät und Aktualisieren des digitalen Abbilds (31) der Hauskommunikationsanlage (10) basierend auf der erkannten Veränderung.

13. Verfahren nach einem der vorhergehenden Ansprüche, umfassend die weiteren Schritte:
Durchführen einer Plausibilitätsprüfung der Konfigurationsparameter, wobei die Plausibilitätsprüfung eine Prüfung auf technische Widersprüche, unzulässige Mehrfachzuweisungen und/oder fehlende Konfigurationsparameter umfasst;
Ausgeben erkannter Fehler oder Konflikte der Plausibilitätsprüfung auf einer Benutzerschnittstelle.

14. Verfahren nach Anspruch 13, umfassend die weiteren Schritte:
Ermitteln mindestens einer möglichen Korrekturoption für einen in der Plausibilitätsprüfung erkannten Fehler;
Ausgeben der ermittelten Korrekturoption auf der Benutzerschnittstelle (34).

15. Hauskommunikationsanlage (10),
mit einer Mehrzahl von physischen Hauskommunikationsendgeräten (11-13), die über eine Netzwerkverbindung (15) miteinander gekoppelt sind,
mit einer Kommunikationsschnittstelle zur Verbindung mit einer zentralen Datenverarbeitungseinheit (30),
mit einer Steuereinheit, die dazu ausgebildet ist, eine zuvor erstellte Konfiguration aus einem digitalen Abbild (31) der Hauskommunikationsanlage (10) zu empfangen und die physischen Hauskommunikationsendgeräte (11-13) basierend auf dieser Konfiguration zu konfigurieren.
